# DEMANDE DE BREVET EUROPEEN

(11) **EP 4 339 075 A1**
(43) Date de publication de la demande: **20.03.2024**
(21) Numéro de dépôt: 23197475.9
(22) Date de dépôt: 14.09.2023
(51) Int. Cl.: B62D 21/11, B62D 27/06

(54) **TITRE DE L'INVENTION : ENSEMBLE DE STRUCTURE DE VÉHICULE AUTOMOBILE À CORPS CREUX**

(30) Priorité: 16.09.2022 FR 2209340
(71) Demandeur: Renault s.a.s, 92100 Boulogne Billancourt (FR)
(72) Inventeur: BERSON, Julien, 72000 LE MANS (FR)

(57) **Abrégé**

L'invention concerne un ensemble de structure comprenant un corps creux présentant deux parois (10, 12) et deux perçages (14, 16) pratiqués respectivement dans lesdites deux parois, ledit corps creux étant adapté à recevoir une pièce de structure (46) et un organe d'assemblage (50) pour la maintenir, ledit organe d'assemblage traversant ladite pièce de structure (46) et ledit corps creux. L'ensemble comprend, d'une part une entretoise tubulaire (28) présentant deux extrémités (30, 32) et installée à l'intérieur dudit corps creux de sorte que lesdites deux parois (10, 12) viennent respectivement en appui contre lesdites deux extrémités opposées (30, 32), l'une (30) desdites deux extrémités présentant un prolongement cylindrique (35) venant s'étendre en saillie de ladite une (10) desdites deux parois; et d'autre part, une bague (40) montée autour dudit prolongement cylindrique (35) et apte à venir en prise entre ladite une (10) desdites deux parois et ladite pièce de structure (46).

## Description

La présente invention se rapporte à un ensemble de structure de véhicule automobile comportant un corps creux longitudinal apte à recevoir une pièce de structure.

Un domaine d'application envisagé, est notamment, mais non exclusivement, celui des trains de roue et en particulier, du berceau des trains de roue.

Il est connu de réaliser un corps creux au moyen de deux pièces en U, ou coquilles, reliées ensemble par leurs ailes. Le corps creux ainsi réalisé définit alors deux parois opposées correspondant respectivement aux fonds des deux pièces en U.

Aussi, une pièce de structure peut être reliée au corps creux ainsi réalisé, au moyen d'une vis de fixation traversant la pièce et le corps creux par deux perçages en vis-à-vis, et par exemple, de deux écrous montés en prise à chacune des extrémités de la vis.

Les deux écrous et la vis viennent alors serrer l'un contre l'autre la pièce de structure et le corps creux.

Un tel assemblage est relativement pérenne dans la mesure où le serrage des deux écrous est important et que la tension axiale qui s'exerce dans la vis l'est d'autant. Toutefois, un tel serrage requiert une résistance mécanique à la déformation du corps creux rhttp://ls-oeb-web.prodoeb.lens.l121/epo_queries/elativement importante, et par conséquent une épaisseur de la paroi des coquilles substantielle.

En revanche, la résistance mécanique du corps creux en situation est généralement suffisante avec des coquilles dont l'épaisseur de la paroi est relativement modeste. Autrement dit, le surplus de matériau nécessaire à la réalisation du corps creux ne serait justifié que par le mode de fixation de la pièce de structure au corps creux.

Or, la recherche incessante pour alléger les véhicules automobiles notamment, est en contradiction avec un tel mode de liaison entre un corps creux et une pièce de structure.

Aussi, un problème qui se pose et que vise à résoudre la présente invention est de fournir un ensemble de structure de véhicule automobile présentant une liaison fiable entre une pièce de structure et un corps creux, sans pour autant alourdir l'ensemble de structure.

Dans ce but, il est proposé un ensemble de structure de véhicule automobile comprenant un corps creux longitudinal présentant deux parois opposées l'une de l'autre et au moins deux perçages pratiqués respectivement dans lesdites deux parois en regard l'un de l'autre, ledit corps creux étant adapté à recevoir une pièce de structure et au moins un organe d'assemblage vissable pour maintenir ladite pièce de structure en regard de l'une desdites deux parois, ledit au moins un organe d'assemblage traversant ladite pièce de structure et ledit corps creux par lesdits au moins deux perçages, pour pouvoir prendre appui contre ladite pièce de structure et à l'opposé, contre l'autre desdites deux parois. L'ensemble de structure comprend en outre : au moins une entretoise tubulaire présentant deux extrémités opposées et installée à l'intérieur dudit corps creux coaxialement auxdits au moins deux perçages de sorte que lesdites deux parois viennent respectivement en appui contre lesdites deux extrémités opposées, l'une desdites deux extrémités présentant un prolongement cylindrique venant s'étendre en saillie de ladite une desdites deux parois à travers le perçage de ladite une desdites deux parois ; et, au moins une bague montée autour dudit prolongement cylindrique et apte à venir en prise entre ladite une desdites deux parois et ladite pièce de structure.

Ainsi, une caractéristique de l'invention réside dans la mise en oeuvre d'une entretoise tubulaire à l'intérieur du corps creux. Et l'organe d'assemblage traverse l'entretoise tubulaire, tandis que les deux parois opposées peuvent venir en appui contre les deux extrémités opposées de l'entretoise tubulaire lorsque l'on vient serrer la pièce de structure contre le corps creux.

De la sorte, la tension dans l'organe d'assemblage peut être importante sans pour autant déformer le corps creux. Partant, l'épaisseur des parois de ce dernier peut être réduite et ainsi, le poids de l'ensemble de structure abaissé.

Autrement dit, le serrage de l'organe d'assemblage peut être important, sans toutefois déformer le corps creux. Partant, la durée de vie d'un tel assemblage peut être importante.

Par ailleurs, grâce à la bague, qui va s'appliquer contre ladite une desdites deux parois, on augmente la surface d'appui de la pièce de structure et par là-même, on préserve le prolongement cylindrique comme on l'expliquera ci-après.

L'ensemble de structure conforme à l'invention n'est pas limité à la mise en oeuvre d'un seul organe d'assemblage. Partant, une pluralité de paires de perçages peuvent être pratiquées dans le corps creux pour pouvoir y relier la pièce de structure, au moyen d'une pluralité d'entretoises tubulaires et de bagues.

Selon un mode de mise en oeuvre de l'invention particulièrement avantageux, ladite au moins une entretoise tubulaire est réalisée dans un organe cylindrique à courbe directrice circulaire, ledit organe cylindrique présentant un collet pour former ladite une desdites deux extrémités opposées de ladite au moins une entretoise tubulaire.

La mise en oeuvre d'un collet sur l'organe cylindrique impose l'installation de l'entretoise tubulaire lors de l'assemblage des deux coquilles adaptées informer le corps creux. Ainsi, on engage tout d'abord le prolongement cylindrique de l'entretoise tubulaire à travers le perçage de ladite une desdites deux parois, et on vient ensuite ajuster l'autre paroi de manière à ce que l'autre extrémité de l'entretoise tubulaire vienne s'appliquer autour du perçage de l'autre paroi, avant de fixer les deux parois l'une par rapport à l'autre. De la sorte, l'entretoise tubulaire est emprisonnée entre les deux parois sans nécessiter de moyen de fixation particulier.

Préférentiellement, ledit organe cylindrique présente une collerette pour former ladite autre desdites deux extrémités opposées de ladite au moins une entretoise tubulaire. De la sorte, la collerette vient s'appliquer plus aisément autour du perçage de l'autre paroi et elle offre une surface de contact plus importante. Cela améliore le maintien de l'entretoise tubulaire en position fixe entre les deux parois opposées et dans l'axe des deux perçages. Autrement dit, cela permet de diminuer la liberté de mouvement de l'entretoise tubulaire.

Avantageusement, ladite au moins une entretoise tubulaire est formée d'une seul pièce en matériau métallique. Elle est par exemple réalisée en acier par emboutissage. Partant, elle offre une grande résistance à la compression axiale.

En outre, selon une caractéristique de l'invention particulièrement avantageuse, ladite au moins une bague présente une section rectangulaire. De la sorte, elle présente deux faces opposées sensiblement parallèles qui viennent s'appliquer respectivement à plat, d'un côté contre ladite une desdites parois, de l'autre côté contre la pièce de structure. Comme on l'expliquera plus en détail dans la suite de la description, on vient alors prendre en étau, d'une part ladite une desdites parois entre le collet et ladite bague, et ladite autres desdites parois entre l'extrémité opposée de l'entretoise tubulaire et l'une des extrémités de l'organe d'assemblage. De la sorte, la pièce de structure est parfaitement solitaire des deux parois opposées, sans déformer pour autant le corps creux.

De plus, ladite au moins une bague présente préférentiellement, une épaisseur supérieure à la différence de l'épaisseur de ladite une desdites deux parois et de la longueur dudit prolongement cylindrique. De la sorte, l'autre extrémité de l'organe assemblage, vient en appui contre la pièce de structure, laquelle vient elle-même en applique contre la bague en demeurant sensiblement écartée du prolongement cylindrique de l'entretoise tubulaire.

En outre, après serrage de l'organe d'assemblage, on obtient une répartition des contraintes plus homogènes dans l'ensemble de structure. Et cela garantit une meilleure tenue dans le temps de l'assemblage vissé.

Préférentiellement, ladite au moins une bague est réalisée dans un matériau métallique. De la sorte, elle offre une résistance à la déformation relativement importante, en rapport avec la résistance à la déformation de l'entretoise tubulaire. Selon une variante de réalisation, ledit corps creux longitudinal présente deux fois deux paires de perçages, ledit corps creux étant adapté à recevoir deux fois deux organes d'assemblage vissables traversant ladite pièce de structure et ledit corps creux respectivement par lesdits deux fois deux paires de perçages ; et il comprend en outre : deux fois deux entretoises tubulaires présentant chacune deux extrémités opposées, et installées à l'intérieur dudit corps creux coaxialement auxdits deux fois deux paires de perçages respectivement, de sorte que lesdites deux parois viennent respectivement en appui contre lesdites deux extrémités opposées de chacune desdites deux fois deux entretoises tubulaires, chacune desdites deux extrémités desdites deux fois deux entretoises tubulaires présentant un prolongement cylindrique, venant s'étendre en saillie de ladite une desdites deux parois ; et, deux fois deux bagues montées respectivement autour desdits prolongements cylindriques et aptes à venir en prise entre ladite une desdites deux parois et ladite pièce de structure. Selon un autre objet, il est proposé un véhicule automobile comprenant un ensemble de structure tel que décrit ci-dessus, ledit ensemble de structure formant un berceau de train de roue arrière.

Avantageusement, le corps creux du berceau présente quatre paires de perçages espacées les unes des autres pour former quatre points de fixation d'un actionneur comme on l'expliquera dans la description détaillée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique en coupe transversale d'un ensemble de structures selon l'invention ; et,
[Fig. 2] est une vue schématique arrière d'un train de roue arrière incluant un ensemble de structure conforme à l'invention.

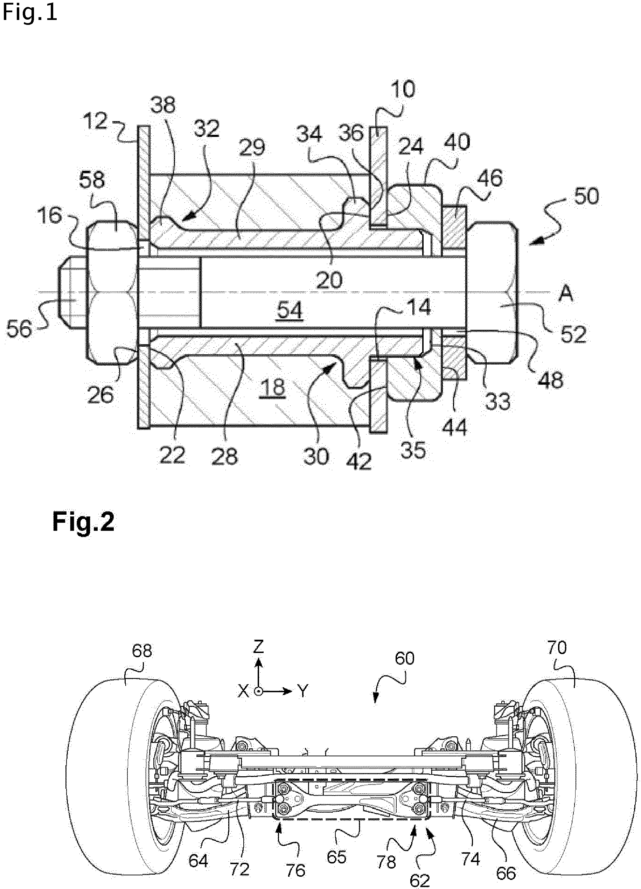

La [Fig. 1] montre partiellement, une première paroi métallique 10 opposée à une seconde paroi métallique 12. Les deux parois 10, 12 s'étendent en formant coquilles, lesquelles sont reliées l'une à l'autre pour former un corps creux s'étendant longitudinalement. Autrement dit, les deux parois 10, 12 sont maintenues en position fixe l'une par rapport à l'autre. Elles sont par exemple écartées l'une de l'autre d'une distance comprise entre 50 mm et 100 millimètres.

La première paroi métallique 10 présente un premier perçage 14, tandis que la seconde paroi métallique 12 présente un second perçage 16 en regard du premier perçage 14.

En outre, les deux parois 10,12 définissent un espace intérieur 18, et la première paroi 10 présente une première bordure circulaire intérieure 20 s'étendant autour du premier perçage 14, tandis qu'à l'opposé, la seconde paroi 12 présente une seconde bordure circulaire intérieure 22.

Aussi, la première paroi 10 présente une première bordure circulaire extérieure 24 opposée à la première bordure circulaire intérieure 20, tandis que la seconde paroi 12 présente une seconde bordure circulaire extérieure 26 opposées à la seconde bordure circulaire intérieure 22.

Conformément à l'invention, une entretoise tubulaire 28 est installée à l'intérieur du corps creux 18 coaxialement aux deux perçages 14, 16.

L'entretoise tubulaire 28 est réalisée en métal dans un organe cylindrique à courbe directrice circulaire 29 et elle présente une première extrémité 30 opposée à une seconde extrémité 32. Son axe de révolution A s'étend sensiblement perpendiculairement aux première et seconde parois 10, 12.

Comme on va l'expliquer en détail, la première paroi 10 vient prendre appui contre la première extrémité 30 de l'entretoise tubulaire 28, tandis que la seconde paroi 12 vient prendre appui contre la seconde extrémité 32 pour pouvoir empêcher la déformation du corps creux.

Plus précisément, l'organe cylindrique 29 s'étend de la seconde bordure intérieure 22 jusqu'à la première paroi 10 en traversant le premier perçage 14 et en venant s'étendant en saillie de la première paroi 10 à l'extérieur du corps creux. Cette partie de l'organe cylindrique 29 s'étendant en saillie définit un prolongement cylindrique 35 de l'entretoise tubulaire 28. Ce prolongement cylindrique 35 se termine par un bord libre 33.

En outre l'organe cylindrique 29 présente un collet 34 situé sensiblement aux trois quarts de sa longueur et définissant un épaulement 36 s'étendant en regard de la première bordure circulaire intérieure 20 de la première paroi 10.

À l'opposé, l'organe cylindrique 29 présente une collerette 38 venant s'étendre en regard de la seconde bordure circulaire intérieure 22. La collerette 38 offre ainsi une surface d'appui potentielle avec la seconde bordure intérieure 22 plus étendue autour du second perçage 16 comparativement à une section droite de l'organe cylindrique. Grâce à la géométrie de l'entretoise tubulaire 28, elle peut être installée à travers le corps creux durant sa réalisation, lorsque les deux coquilles sont assemblées. On engage tout d'abord le prolongement cylindrique 35 à travers le premier perçage 14 de la première paroi 10 avant de rapprocher la seconde paroi 12 contre la collerette 38. Après que les deux coquilles ont été solidarisées, l'entretoise tubulaire 28 est prisonnière à l'intérieur du corps creux, sans autre moyen de fixation particulier.

En outre, et conformément à l'invention, une bague métallique 40 est engagée autour du prolongement cylindrique 35 et est portée en applique contre la première bordure circulaire extérieure 24. La bague métallique 40 est de section rectangulaire et elle présente deux faces d'appui opposées sensiblement parallèles entre elles, une face applique 42 et une face de réception 44. La face d'applique 42 est en appui à plat contre la première bordure circulaire extérieure 24.

En outre, la bague 40 présente une épaisseur, entre ses deux faces opposées 42, 44 supérieure à la longueur du prolongement cylindrique 35 en partant du collet 34, soustraite de l'épaisseur de la première paroi 10. De la sorte, le prolongement cylindrique 35 s'étend axialement à l'intérieur de la bague 40 sans faire saillie de sa face de réception 44.

Aussi, le diamètre interne de la bague 40 est sensiblement supérieur au diamètre externe du prolongement cylindrique 35.

La bague 40 reçoit à son tour en applique, contre sa face de réception 44, une pièce de structure 46 représentée partiellement, laquelle présente un orifice 48.

La pièce structure 46 est alors solidarisée au corps creux formé par les deux parois 12, 10 au moyen d'un organe d'assemblage vissable 50.

Cet organe assemblage vissable 50, est constitué d'un boulon présentant une tête 52 en appui contre la pièce structure 46, une tige 54 s'étendant à travers la pièce de structure 46 par son orifice 48 et à travers l'entretoise tubulaire 28 selon son axe de révolution A, pour traverser la seconde paroi 12 par le second perçage 16 et venir s'étendre en saillie. L'extrémité de la tige 54, à l'opposé de la tête 52, se termine par un filetage 56 dans lequel est engagée en prise, un écrou 58. L'écrou 58 vient alors en appui contre la seconde bordure circulaire extérieure 26.

Ainsi, la tête de l'organe d'assemblage vissable 50 est en appui contre la pièce de structure 46, tandis qu'à l'opposé l'écrou 58 est en appui contre la seconde paroi 12. Le serrage de l'organe d'assemblage 50, provoqué par la rotation de l'écrou 58 par rapport à la tige 54, tend à rapprocher l'un vers l'autre, la pièce de structure 46 et la seconde paroi 12 jusqu'à une certaine limite.

En effet, le serrage provoque à la fois la prise en étau de la première paroi 10 entre le collet 34 de l'entretoise tubulaire 28 et la bague 40 et la prise en étau de la seconde paroi 12 entre la collerette 38 de l'entretoise tubulaire 28 et l'écrou 58.

Compte tenu des tensions axiales qui s'exercent dans la tige 54, l'entretoise tubulaire 28 et la bague 40 sont indéformables axialement, de sorte que les deux parois 10, 12 ne subissent aucun effort qui tendrait à les reprocher l'une de l'autre, et ce, quelle que soit cette tension axiale. Partant, on peut serrer l'organe d'assemblage 50 avec une forte tension de manière à éviter le desserrage.

Aussi, la surface de réception 44 de la bague est suffisamment étendue pour recevoir à plat la pièce de structure 46 et assurer ainsi un appui stable. On observera également que le bord 33 du prolongement cylindrique 35 est libre. La coopération du prolongement cylindrique 35 et de la bague que le prolongement cylindrique 35 peut guider en translation, permet de prendre en étau la paroi 10, précisément entre le collet 34 et la bague 40 lors du serrage de la vis 54.

En outre, la surface d'appui définie par le bord 33 est bien moins étendue que la surface de réception 44 de la bague 40.

Par ailleurs, la pièce de structure 46 est à la fois solidaire de la première paroi 10 et de la seconde paroi 12. De la sorte, on obtient une meilleure répartition des contraintes dans le corps creux. Cela garantit une tenue de l'assemblage vissé sur une longue période.

Un tel ensemble de structure peut être mis en oeuvre avantageusement dans un train de roue arrière de véhicule automobile, tel que représenté sur la [Fig. 2].

La [Fig. 2] illustre, vu de l'arrière, un train de roue arrière 60 de véhicule automobile.

Il s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite en situation de conduite ; et l'axe Z s'étend selon une direction verticale, orienté à l'opposé du sol.

Le train de roue arrière 60 comporte un berceau transversal 62 formé d'un corps creux et s'étendant selon Y. Il comporte également des bras 64, 66 reliant le berceau 62 respectivement aux roues 68, 70. Les roues arrière sont ici directionnelles, et ainsi le train de roue arrière 60 présente un actionneur non représenté, mais inclus à l'intérieur du rectangle 65 à l'arrière du berceau 62. L'actionneur comprend une plaque d'ancrage, venant en applique contre le berceau 62. Le rectangle 65 schématise également la plaque d'ancrage dont la pièce de structure représentée sur la [Fig. 1] correspond à une portion. Et, un vérin électrique est par exemple installé sur la plaque d'ancrage. Le vérin électrique est relié au deux roues 68, 70 au moyen de biellettes de direction 72, 74.

Ainsi, la plaque d'ancrage de l'actionneur est solidarisée au berceau 62 au moyen de deux paires d'organes d'assemblage 76, 78 en formant un ensemble de structure conforme à l'invention.

Pour ce faire, le berceau 62 présente de chaque côté, deux paires superposées de premier et second perçages, tandis qu'il inclut à l'intérieur une paire d'entretoises tubulaires associées à une paire de bagues et à la paire d'organes d'assemblage 76 ; 78. Chacun des organes assemblage et chacune des entretoises tubulaires s'étendent selon l'axe X à travers le berceau 62.

## Revendications

1. Ensemble de structure de véhicule automobile comprenant un corps creux longitudinal présentant deux parois (10, 12) opposées l'une de l'autre et au moins deux perçages (14, 16) pratiqués respectivement dans lesdites deux parois en regard l'un de l'autre, ledit corps creux étant adapté à recevoir une pièce de structure (46) et au moins un organe d'assemblage vissable (50) pour maintenir ladite pièce de structure en regard de l'une (10) desdites deux parois, ledit au moins un organe d'assemblage traversant ladite pièce de structure (46) et ledit corps creux par lesdits au moins deux perçages (14, 16), pour pouvoir prendre appui contre ladite pièce de structure et à l'opposé, contre l'autre (12) desdites deux parois ;
**caractérisé en ce qu'**il comprend en outre :
- au moins une entretoise tubulaire (28) présentant deux extrémités opposées (30, 32) et installée à l'intérieur dudit corps creux coaxialement auxdits au moins deux perçages (14, 16) de sorte que lesdites deux parois (10, 12) viennent respectivement en appui contre lesdites deux extrémités opposées (30, 32), l'une (30) desdites deux extrémités présentant un prolongement cylindrique (35) venant s'étendre en saillie de ladite une (10) desdites deux parois à travers le perçage (14) de ladite une desdites deux parois ; et,
- au moins une bague (40) montée autour dudit prolongement cylindrique (35) et apte à venir en prise entre ladite une (10) desdites deux parois et ladite pièce de structure (46).

2. Ensemble de structure selon la revendication 1, **caractérisé en ce que** ladite au moins une entretoise tubulaire (28) est réalisée dans un organe cylindrique (29) à courbe directrice circulaire, ledit organe cylindrique présentant un collet (34) pour former ladite une (30) desdites deux extrémités opposées de ladite **au moins une** entretoise tubulaire (28).

3. Ensemble de structure selon la revendication 2, **caractérisé en ce que** ledit organe cylindrique (29) présente une collerette (38) pour former ladite autre (32) desdites deux extrémités opposées de ladite au moins une entretoise tubulaire (28).

4. Ensemble de structure selon l'une quelconque des revendications 1 à 3, **caractérisé en ce que** ladite au moins une entretoise tubulaire (28) est formée d'une seul pièce en matériau métallique.

5. Ensemble de structure selon l'une quelconque des revendications 1 à 4, **caractérisé en ce que** ladite au moins une bague (40) présente une section rectangulaire.

6. Ensemble de structure selon l'une quelconque des revendications 1 à 5, **caractérisé en ce que** ladite au moins une bague (40) présente une épaisseur supérieure à la différence de l'épaisseur de ladite une (10) desdites deux parois et de la longueur dudit prolongement cylindrique (35).

7. Ensemble de structure selon l'une quelconque des revendications 1 à 6, **caractérisé en ce que** ladite au moins une bague (40) est réalisée dans un matériau métallique.

8. Ensemble de structure selon l'une quelconque des revendications 1 à 7, **caractérisé en ce que** ledit corps creux longitudinal présente deux fois deux paires de perçages, ledit corps creux étant adapté à recevoir deux fois deux organes d'assemblage vissables (76, 78) traversant ladite pièce de structure et
ledit corps creux respectivement par lesdits deux fois deux paires de perçages ; et **en ce qu'**il comprend en outre :
- deux fois deux entretoises tubulaires présentant chacune deux extrémités opposées, et installées à l'intérieur dudit corps creux coaxialement auxdits deux fois deux paires de perçages respectivement, de sorte que lesdites deux parois viennent respectivement en appui contre lesdites deux extrémités opposées de chacune desdites deux fois deux entretoises tubulaires, chacune desdites deux extrémités desdites deux fois deux entretoises tubulaires présentant un prolongement cylindrique, venant s'étendre en saillie de ladite une desdites deux parois ; et,
- deux fois deux bagues montées respectivement autour desdits prolongements cylindriques et aptes à venir en prise entre ladite une desdites deux parois et ladite pièce de structure.

9. Véhicule automobile comprenant un ensemble de structure selon l'une quelconque des revendications 1 à 8, ledit corps creux formant un berceau de train de roue arrière. 1
